# EUROPÄISCHE PATENTANMELDUNG

(11) **EP 1 191 656 A2**
(43) Veröffentlichungstag der Anmeldung: **27.03.2002**
(21) Anmeldenummer: 01115626.2
(22) Anmeldetag: 03.07.2001
(51) Int. Cl.: H02G 3/18

(54) **Geräteaufnahme für eine Unterflurgerätedose**

(30) Priorität: 21.09.2000 DE 20016343 U
(71) Anmelder: Albert Ackermann GmbH & Co. KG, 51643 Gummersbach (DE)
(72) Erfinder: Mellies, Nils-Ove, 51674 Wiehl (DE); Warkus, Kai, 51709 Marienheide (DE)
(74) Vertreter: Patentanwälte Ruff, Wilhelm, Beier, Dauster & Partner

(57) **Zusammenfassung**

- 2.1.: Erfindung betrifft eine Geräteaufnahme für eine Unterflurgerätedose mit einer rahmenförmig umlaufenden Wandung (10) mit Führungen und einem Befestigungsrahmen (24, 28, 30) zum Schrägeinbau von Verbindern.
- 2.2: Erfindungsgemäß ist eine Haube (35, 36, 37) mit einer Aussparung und ein Träger (15, 16, 17) mit Führungen (22) vorgesehen, wobei der Befestigungsrahmen (24, 28, 30) in einer die Aussparung wenigstens teilweise abdeckenden Weise an der Haube (35, 36, 37) befestigbar ist, die Haube (35, 36, 37) in die Führungen (22) des Trägers (15, 16, 17) einschiebbar und mit diesem verrastbar ist.

## Beschreibung

Die Erfindung betrifft eine Geräteaufnahme für eine Unterflurgerätedose mit einer rahmenförmig umlaufenden Wandung mit Führungen und einem Befestigungsrahmen zum Schrägeinbau von Verbindern.

Aus dem deutschen Gebrauchsmuster Nr. 298 17 565.7 ist eine gattungsgemäße Geräteaufnahme bekannt. Ein Befestigungsrahmen zur Montage von Verbindern wird hier in schräg verlaufende, schlitzartige Führungen der umlaufenden Wandung eines Gerätebechers eingeschoben. Die schräg verlaufenden Führungen belegen relativ große Abschnitte der Innenflächen des Gerätebechers, die dadurch nicht mehr ohne weiteres für den horizontalen Einbau von Verbindern genutzt werden können.

Mit der Erfindung soll eine flexible, den Schrägeinbau von Verbindern ermöglichende Geräteaufnahme geschaffen werden.

Erfindungsgemäß ist hierzu eine Geräteaufnahme für eine Unterflurgerätedose mit einer rahmenförmig umlaufenden Wandung mit Führungen und einem Befestigungsrahmen zum Schrägeinbau von Verbindern vorgesehen, bei der eine Haube mit einer Aussparung und ein Träger mit Führungen vorgesehen sind, wobei der Befestigungsrahmen in einer die Aussparung wenigstens teilweise abdeckenden Weise an der Haube befestigbar ist, die Haube in die Führungen des Trägers einschiebbar und mit diesem verrastbar ist und der Träger in die Führungen der Wandung einschiebbar und mit dieser verrastbar ist. Indem der Befestigungsrahmen an der Haube vorgesehen ist, müssen keine speziellen Führungen für den Schrägeinbau von Verbindern in der umlaufenden Wandung vorgesehen werden. Durch Einrasten der Haube in den Träger und Einrasten des Trägers in die umlaufende Wandung ist eine werkzeuglose Montage möglich. Durch Vorsehen einer Haube und eines Trägers, der in die Führungen der Wandung einschiebbar und mit dieser verrastbar ist, wird ein modularer Aufbau geschaffen, der, zusammen mit dem Befestigungsrahmen, eine große Flexibilität ermöglicht. Für unterschiedliche Verbinder müssen lediglich die Befestigungsrahmen verändert werden. Durch das Vorsehen einer Haube und eines Trägers wird die Montage der Geräteaufnahme erleichtert. Die Untereinheit aus Haube, Befestigungsrahmen, Verbinder und Träger kann vormontiert werden und abschließend in die umlaufende Wandung, die beispielsweise einen Gerätebecher bildet, eingesetzt werden.

In Weiterbildung der Erfindung ist vorgesehen, dass der Träger an seinen Stirnseiten mit Verbindungselementen zum Anschluß an weitere Träger und/oder Abdeckelemente versehen ist. Durch diese Maßnahmen wird eine vollständige, stabile Abdeckung der rahmenförmig umlaufenden Wandung, beispielsweise eines Gerätebechers, ermöglicht. Eine vollständige Abdeckung kann beispielsweise durch mehrere, hintereinander angeordnete Träger oder Träger und in den Gerätebecher einschiebbare Abdeckelemente erfolgen. Die Verbindungselemente weisen vorteilhafterweise eine Schwalbenschwanzform auf, wobei Zapfen und Ausnehmungen in bezug auf eine Mitte des Trägers punktsymmetrisch angeordnet sind, so dass der Träger auch um 180° gedreht noch mit weiteren Trägern und/oder Abdeckelementen verbunden werden kann.

In Weiterbildung der Erfindung weist der Befestigungsrahmen einen in eine schlitzförmige Öffnung der Haube einführbaren ersten Befestigungsabschnitt und einen zweiten Befestigungsabschnitt auf, der dem ersten Befestigungsabschnitt allgemein gegenüberliegt, parallel zu einem in die Führungen des Trägers einschiebbaren Halteabschnitt der Haube ausrichtbar und zusammen mit dem Halteabschnitt der Haube in die Führungen des Trägers einschiebbar ist. Auf diese Weise wird bei konstruktiv einfacher Ausführung der Geräteaufnahme ein sicherer Halt des Befestigungsrahmens an der Haube und dem Träger gewährleistet. Dies ist insbesondere bei generell schwergängigen Verbindern von Bedeutung. Der Befestigungsrahmen ist ohne Werkzeug zu montieren und kann dadurch bei Bedarf leicht ausgetauscht werden.

In Weiterbildung der Erfindung sind in die Haube einrastbare Abdeckklappen vorgesehen. Durch einrastbare Abdeckklappen können nicht benutzte Verbinder abgedeckt und gegen Schmutz geschützt werden. Sollen die entsprechenden Verbinder benutzt werden, können die Klappen aufgeklappt oder aus der Haube ausgerastet und entfernt werden.

In Weiterbildung der Erfindung ist vorgesehen, dass der Befestigungsrahmen an einer Innenseite der Haube befestigbar ist und der Träger eine Öffnung aufweist, deren Querschnitt ein Durchschieben des Befestigungsrahmens mit montierten Verbindern erlaubt. Dadurch können die Verbinder an den Befestigungsrahmen montiert werden, ohne dass zuvor der Träger oder die Haube auf die an die Verbinder angeschlossenen Kabel aufgefädelt werden muss. Vielmehr können die Verbinder an dem Befestigungsrahmen befestigt, beispielsweise verrastet werden, und anschließend wird der Befestigungsrahmen an der Haube und am Träger festgelegt. Daraufhin kann die vormontierte Untereinheit aus Haube, Befestigungsrahmen mit Verbinder und Träger in einen Gerätebecher eingeschoben und verrastet werden.

Weitere Merkmale und Vorteile der Erfindung ergeben sich aus den Ansprüchen und der folgenden Beschreibung im Zusammenhang mit den Zeichnungen. In den Zeichnungen zeigen:
- Fig. 1: eine Explosionsansicht einer erfindungsgemäßen Geräteaufnahme gemäß einer bevorzugten Ausführungsform und
- Fig. 2: eine Draufsicht auf die erfindungsgemäße Geräteaufnahme im zusammengebauten Zustand.

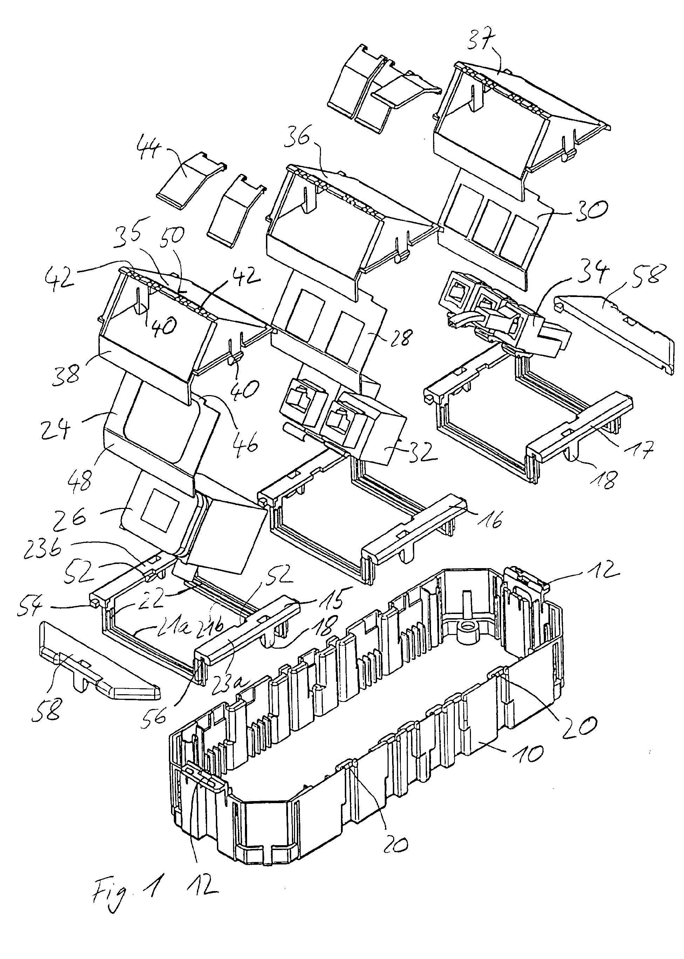

Die in der Fig. 1 in einer Explosionsansicht dargestellte erfindungsgemäße Geräteaufnahme weist einen Gerätebecher 10 mit einer rahmenförmig umlaufenden Wandung auf. Mit Hilfe von Rasthaken 12 kann der Gerätebecher 10 in einer Unterflurgerätedose befestigt werden. Die umlaufende Wandung des Gerätebechers 10 ist sowohl an ihrer Innenseite als auch an ihrer Außenseite mit senkrechten Führungen versehen, in die Träger 15, 16, 17 eingesetzt werden können. Die Träger 16 weisen Rasthaken 18 auf, die beim Aufschieben der Träger 15, 16, 17 auf den Gerätebecher 10 hinter passende Rastvorsprünge 20 am Gerätebecher 10 schnappen und damit die Träger 15, 16, 17 am Gerätebecher 10 festlegen.

Jeder Träger 15, 16, 17 weist die Form eines Rahmens auf und ist mit zwei gegenüberliegenden, U-förmigen Schenkeln 21a, 21b versehen, an denen jeweils Führungen 22 vorgesehen sind. Zwei weitere, ebenfalls gegenüberliegende Schenkel 23a, 23b des Rahmens, die senkrecht zu den U-förmigen Schenkeln 21a, 21b verlaufen, tragen die Rasthaken 18 und liegen im montierten Zustand des Trägers 15, 16 oder 17 auf der Oberkante des Gerätebechers 10 auf.

Ein Befestigungsrahmen 24 weist eine zentrale Öffnung auf und ist für die Montage eines Verbinders, vorliegend eine Buchse 26, vorgesehen. Zur Verdeutlichung sind in der Fig. 1 zwei weitere Befestigungsrahmen 28 bzw. 30 dargestellt, die mit zwei bzw. drei Öffnungen zur Montage von Anschlussbuchsen 32 bzw. 34 versehen sind. Die Außenabmessungen der Befestigungsrahmen 24, 28 bzw. 30 sind identisch und diese sind daher untereinander austauschbar. Die Befestigungsrahmen 24, 28 bzw. 30 sind zur Montage in Hauben 35, 36 bzw. 37 vorgesehen, die identisch aufgebaut sind und jeweils an einer schräg geneigten Außenwand eine Aussparung aufweisen. Die Befestigungsrahmen 24, 28 bzw. 30 können an den Hauben 35, 36 bzw. 37 in einer Weise befestigt werden, dass deren Aussparung durch den Befestigungsrahmen 24, 28 bzw. 30 abgedeckt ist und die Anschlussbuchsen 26, 32 oder 34 durch die Aussparung der Haube 35, 36 bzw. 37 zugänglich sind. Aufgrund des identischen Aufbaus der Hauben 35, 36 und 37 wird im folgenden nur noch die Haube 35 detaillierter erläutert. Unterhalb der Aussparung der Haube 35 ist ein Halteabschnitt 38 vorgesehen, der gegenüber einer durch die Aussparung aufgespannten Ebene zur Lotrechten hin abgewinkelt ist. Dreieckförmige Seitenwände der Haube 35 tragen jeweils einen Rasthaken 40. Oberhalb der Aussparung der Haube 35 sind Halterungen 42 vorgesehen, in die Abdeckklappen 44 eingerastet werden können. Durch Vorsehen mehrerer Halterungen 42 über eine Breite der Abdeckhaube 35 können die Abdeckklappen 44 in verschiedenen Positionen über die Breite der Abdeckhaube 35 eingerastet werden.

Der Befestigungsrahmen 24 weist einen ersten Befestigungsabschnitt auf, der die Form einer, sich von einer oberen Kante des Befestigungsrahmens 24 aus erstreckenden Lasche 46 hat. Gegenüber der Lasche 46 weist der Befestigungsrahmen 24 einen zweiten Befestigungsabschnitt 48 auf, der gegenüber dem Abschnitt des Befestigungsrahmens 24, der für die Montage der Anschlussbuchse 26 vorgesehen ist, zur Lotrechten hin abgewinkelt ist und dadurch parallel zu dem Halteabschnitt 38 der Haube 35 ausgerichtet werden kann, wenn der Befestigungsrahmen 24 an die Innenseite der Haube 35 im Bereich der Aussparung angelegt ist. Zur Montage des Befestigungsrahmens 24 wird die Lasche 46 in eine schlitzförmige Öffnung 50 in der Haube 35 eingeführt, und der zweite Befestigungsabschnitt 48 wird von innen an den Halteabschnitt 38 der Haube 35 angelegt. Damit ist der zweite Befestigungsabschnitt 48 parallel zu dem Halteabschnitt 38 ausgerichtet, und der Halteabschnitt 38 kann zusammen mit dem zweiten Befestigungsabschnitt 48 in die Führung 22 des Trägers 15 eingeführt werden.

Die Haube 35 wird so weit auf den Träger 15 zu bewegt, bis die Rasthaken 40 der Haube 35 unter die Schenkel 23a, 23b des Trägers 15 im Bereich von Aussparungen 52 schnappen. Sind die Rasthaken 40 unter die Schenkel 23a, 23b im Bereich der Aussparungen 52 geschnappt, ist die Haube 35 fest mit dem Träger 15 verbunden, und gleichzeitig ist der Befestigungsrahmen 24 relativ zum Träger 15 und der Haube 35 dadurch festgelegt, dass die Lasche 46 in der schlitzförmigen Öffnung 50 der Haube 35 und der zweite Befestigungsabschnitt 48 zusammen mit dem Halteabschnitt 38 in der Führung 22 gehalten sind. Zusammen mit der Anschlussbuchse 26, die in der Öffnung des Befestigungsrahmens 24 befestigt ist, ist dadurch eine kompakte Untereinheit gebildet, die komplett auf den Gerätebecher aufgesetzt, mit diesem verrastet und auch wieder von diesem getrennt werden kann.

Die Befestigungsrahmen 28 und 30 werden in gleicher Weise mit den Hauben 36, 37 und den Trägern 16, 17 verbunden.

Jeder Träger 15, 16, 17 weist an den Stirnseiten der parallel zu den längeren Seiten des Gerätebechers 10 ausgerichteten Schenkel 23a, 23b jeweils ein Verbindungselement auf, das entweder als schwalbenschwanzförmiger Zapfen 54 oder als passend ausgeformte Ausnehmung 56 ausgebildet ist. Durch die Zapfen 54 und die Ausnehmungen 56 können mehrere Träger 15, 16, 17 zu einer stabilen Einheit verbunden werden und zusammen auf den Gerätebecher 10 aufgesetzt werden. Um einen Innenraum des Gerätebechers 10 vollständig gegen Eindringen von Schmutz oder Wasser abzudichten, sind Endstücke 58 vorgesehen, die an ihrer jeweiligen, den Trägern 15, 16, 17 zugewandten Stirnseite ebenfalls mit schwalbenschwanzförmigen Zapfen bzw. passenden Ausnehmungen versehen sind und dadurch mit der Stirnseite eines beliebigen Trägers 15, 16, 17 verbunden werden können. Nachdem die Endstücke 58 an einen jeweiligen Träger 15 bzw. 17 angesetzt sind, wird der Verbund aus zwei Endstücken 58 und drei Trägern 15, 16, 17 eventuell mit Hauben 35, 36, 37 sowie Befestigungsrahmen 24, 28 und 30 und Anschlussbuchsen 26, 32 und 34, auf den Gerätebecher 10 aufgesetzt, so dass der Innenraum des Gerätebechers 10 nach oben vollständig abgeschlossen ist.

Indem die schwalbenschwanzförmigen Zapfen 54 und die passend ausgeformten Ausnehmungen 56 an gegenüberliegenden Stirnseiten eines Schenkels 23a bzw. 23b des Trägers 15 sowie ebenfalls an den anderen Trägern 16, 17 jeweils abwechselnd vorgesehen und demnach punktsymmetrisch zur Mitte der Träger 15, 16, 17 ausgerichtet sind, kann jeder Träger 15, 16, 17 um 180° gedreht werden und trotzdem noch mit einem benachbarten Träger 15, 16, 17 mit Hilfe der Zapfen 54 und der Ausnehmungen 56 verbunden werden. Beispielsweise ist in der Darstellung der Fig. 1 der vorderste Träger 15 um 180° gegenüber den hinteren beiden Trägern 16 verdreht.

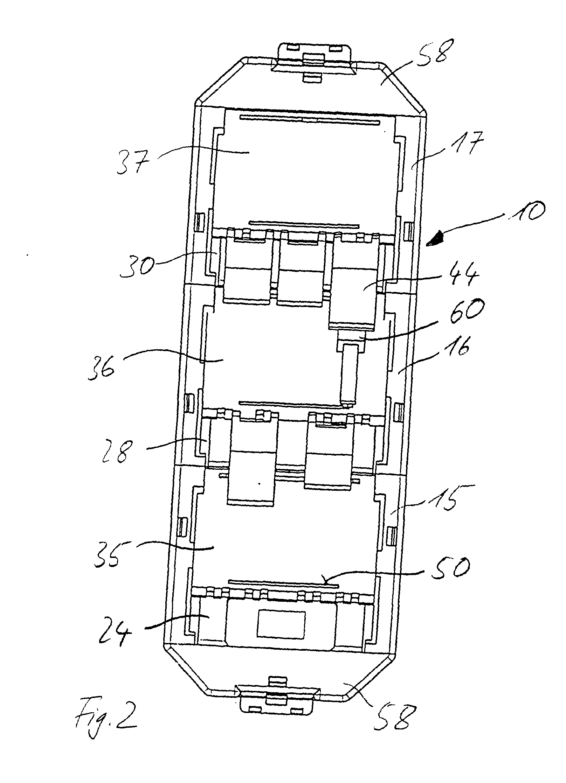

Die Darstellung der Fig. 2 zeigt eine Draufsicht auf die erfindungsgemäße Geräteaufnahme im zusammengebauten Zustand. In der Draufsicht der Fig. 2 ist zu erkennen, dass der Innenraum des Gerätebechers 10 nach oben durch die beiden Endstücke 58 und die Träger 15, 16, 17, auf die jeweils eine Haube 35, 36 bzw. 37 mit einem Befestigungsrahmen 24, 28 bzw. 30 aufgesetzt ist, vollständig verschlossen ist. In der Fig. 2 gut zu erkennen ist die schlitzförmige Öffnung 50, die in jeder Haube 35, 36, 37 vorgesehen ist, um die Lasche 46 der Befestigungsrahmen 24, 28 oder 30 aufzunehmen. Entsprechend der Darstellung der Fig. 1 ist in eine der Anschlussbuchsen 34, die in dem Befestigungsrahmen 30 angeordnet sind, ein Stecker 60 eingesteckt. Folglich ist die dieser Anschlussbuchse 34 zugeordnete Abdeckklappe 44 in der Darstellung der Fig. 2 aufgeklappt, wohingegen die benachbarten Abdeckklappen 44 die darunter angeordneten Buchsen 34 abdecken und dadurch gegen Eindringen von Schmutz schützen.

Auch wenn die Darstellung der Fig. 1 und der Fig. 2 die Hauben 35, 36, 37 in eine Richtung ausgerichtet zeigt, ist festzustellen, dass jede Haube 35, 36, 37 auf einem jeweiligen Träger 15, 16, 17 um 180° verdreht montiert werden kann. Wie der Fig. 1 zu entnehmen ist, weisen beide gegenüberliegenden U-förmigen Schenkel 21a, 21b des Trägers 15 eine Führung 22 für den Halteabschnitt 38 der Haube 35 auf. Eine um 180° gedrehte Anordnung der Haube 36 kann sinnvoll sein, wenn anstelle der in der Fig. 1 gezeigten weiteren Träger 16, 17 andere Installationsgeräte neben einem Träger 15 in den Gerätebecher 10 eingesetzt werden. Darüber hinaus können die Hauben 35, 36, 37 und die Träger 15, 16, 17 in allen dafür vorgesehenen Positionen an dem Gerätebecher 10 angeordnet werden, ohne bauliche Veränderungen an den Hauben 35, 36, 37 oder den Trägern 15, 16, 17 zu erfordern. Dadurch ist ein äußerst flexibler Aufbau der erfindungsgemäßen Geräteaufnahme bereitgestellt.

## Patentansprüche

1. Geräteaufnahme für eine Unterflurgerätedose mit einer rahmenförmig umlaufenden Wandung (10) mit Führungen und einem Befestigungsrahmen (24, 28, 30) zum Schrägeinbau von Verbindern, **dadurch gekennzeichnet, dass** eine Haube (35, 36, 37) mit einer Aussparung und ein Träger (15, 16, 17) mit Führungen (22) vorgesehen sind, wobei der Befestigungsrahmen (24, 28, 30) in einer die Aussparung wenigstens teilweise abdeckenden Weise an der Haube (35, 36, 37) befestigbar ist, die Haube (35, 36, 37) in die Führungen (22) des Trägers (15, 16, 17) einschiebbar und mit diesem verrastbar ist.

2. Geräteaufnahme nach Anspruch 1, **dadurch gekennzeichnet, dass** der Träger (15, 16, 17) an seinen Stirnseiten mit Verbindungselementen (54, 60) zum Anschluss an weitere Träger (15, 16, 17) und/oder Abdeckelemente (58) versehen ist.

3. Geräteaufnahme nach einem der vorstehenden Ansprüche, **dadurch gekennzeichnet, dass** der Befestigungsrahmen (24, 28, 30) einen in eine schlitzförmige Öffnung (50) der Haube (35, 36, 37) einführbaren ersten Befestigungsabschnitt (46) und einen zweiten Befestigungsabschnitt (48) aufweist, der dem ersten Befestigungsabschnitt (46) allgemein gegenüberliegt, parallel zu einem in die Führungen (22) des Trägers (15, 16, 17) einschiebbaren Halteabschnitt (38) der Haube (35, 36, 37) ausrichtbar ist und zusammen mit dem Halteabschnitt (38) der Haube (35, 36, 37) in die Führungen (22) des Trägers (15, 16, 17) einschiebbar ist.

4. Geräteaufnahme nach einem der vorstehenden Ansprüche, **dadurch gekennzeichnet, dass** in die Haube (35, 36, 37) einrastbare Abdeckklappen (44) vorgesehen sind.

5. Geräteaufnahme nach einem der vorstehenden Ansprüche, **dadurch gekennzeichnet, dass** der Befestigungsrahmen (24, 28, 30) an einer Innenseite der Haube (35, 36, 37) befestigbar ist und der Träger (15, 16, 17) eine Öffnung aufweist, deren Querschnitt ein Durchschieben des Befestigungsrahmens (24, 28, 30) mit montierten Verbindern (26, 28, 30) erlaubt.
